# FASCICULE DE BREVET EUROPEEN

(11) **EP 2 577 948 B1**
(45) Date de publication et mention de la délivrance du brevet: **16.03.2016**
(21) Numéro de dépôt: 11726888.8
(22) Date de dépôt: 23.05.2011
(51) Int. Cl.: H04M 1/04, H04M 1/725

(54) **COQUE POUR TELEPHONE MOBILE AVEC FONCTIONNALITE NFC**
HÜLLE FÜR EIN MOBILTELEFON MIT NFC-FUNKTION
SHELL FOR MOBILE TELEPHONE WITH NFC FUNCTIONALITY

(30) Priorité: 27.05.2010 FR 1054117
(43) Date de publication de la demande: 10.04.2013
(73) Titulaire: Orange, 75015 Paris (FR)
(72) Inventeur: LEVIONNAIS, Philippe, F-14000 Caen (FR); PICQUENOT, David, F-14280 Authie (FR)
(74) Mandataire: Cabinet Plasseraud
(86) Numéro de dépôt international: PCT/FR2011/051161
(87) Numéro de publication internationale: WO 2011/148087

(56) Documents cités:
- EP-A1- 2 175 565
- WO-A1-00/79771
- WO-A1-03/067539
- KR-A- 20080 113 185

## Description

La présente invention concerne le domaine de la technologie du sans contact, et plus particulièrement le domaine de l'utilisation d'une telle technologie dans les terminaux de communication mobiles pour exécuter des applications dites « sans contact ».

Un exemple de mise en oeuvre d'applications sans contact repose sur une technologie de type NFC (pour 'Near Field Communication' en anglais). Ces applications sans contact peuvent être, par exemple, relatives à des transactions électroniques dans le domaine bancaire ou encore dans les transports publics, ou bien également des applications d'identification, de contrôle d'accès. Une communication de type NFC est établie entre deux entités sans contact, ou encore deux entités NFC, l'une opérant en tant que carte sans contact et l'autre opérant en tant que lecteur de carte sans contact. Dans un autre mode de fonctionnement, dit mode P2P (pour 'Peer To Peer'), deux entités NFC opérant en tant que carte sans contact échangent des données localement et jouent donc un rôle équivalent.

Une telle entité NFC est composée d'un dispositif de communication en champ proche, ou encore dispositif NFC par la suite, et d'une antenne associée qui lui permet de mettre en place une communication sans contact avec une autre entité NFC. L'entité NFC qui opère en tant que carte sans contact peut par exemple correspondre à une étiquette radio 'RFID' (de l'anglais 'Radio Frequency Identification'). Une entité NFC qui opère en tant que lecteur de carte peut correspondre par exemple à un terminal de paiement électronique ou une borne pour valider des tickets électroniques de transport, ou encore un lecteur d'étiquettes adapté pour identifier des étiquettes radio, selon les applications considérées.

Les fonctionnalités d'une telle entité sans contact peuvent être fournies par un terminal de téléphonie mobile. Dans ce cas, le terminal de téléphonie mobile contient une carte d'identité d'abonné, ou encore carte SIM (de l'anglais 'Subscriber Identity Module'), ainsi qu'un dispositif NFC et son antenne associée, comme prévu dans le document WO 03/067539.

Dans ce contexte, des applications, dites « sans contact » nécessitant un certain niveau de sécurité, sont habituellement installées dans la carte d'identité d'abonné du terminal mobile, ou carte « SIM ». Une communication peut ainsi être établie au sein du terminal entre l'application sans contact de la carte d'identité d'abonné et le dispositif sans contact. Puis, le dispositif sans contact, installé sur le terminal mobile, permet un dialogue du terminal mobile, plus précisément de l'application concernée, avec une autre entité sans contact située à proximité du terminal. Ces téléphones mobiles peuvent alors être utilisés en tant qu'entité sans contact par exemple.

Il n'est toutefois pas aisé d'adapter un téléphone mobile déjà existant pour le rendre capable d'offrir des fonctionnalités de type NFC.

La présente invention vise une telle adaptation de téléphone mobile au domaine NFC.

Un premier aspect de la présente invention propose une coque pour un téléphone mobile qui est apte à comprendre une carte d'identité d'abonné ;
ledit téléphone mobile ayant, d'une part, une face avant présentant un interface utilisateur et, d'autre part, une face arrière ; et la coque ayant une surface interne et une surface externe ;
la coque ayant une forme adaptée pour recevoir de manière amovible le téléphone mobile de telle sorte que la face arrière du téléphone mobile soit maintenue le long de la surface interne de la coque ;
dans laquelle la surface interne comprend :
- un premier moyen adapté pour maintenir un dispositif de communication en champ proche et une antenne qui lui est associée ; et
- un second moyen adapté pour guider au moins une portion d'une interface filaire (31) destinée à relier le dispositif de communication en champ proche à la carte d'identité d'abonné.

On entend par les termes 'dispositif NFC' ou 'dispositif sans contact', un ensemble comprenant un composant NFC, ou encore composant sans contact, et d'autres composants électroniques qui sont utiles à son implémentation dans un circuit pour son utilisation, comme par exemple des condensateurs ou encore des résistances.

Il est donc ici prévu d'adapter un téléphone mobile à des applications NFC en reliant la carte d'identité d'abonné à un dispositif de communication en champ proche par une interface filaire. En procédant ainsi, grâce à cet ensemble adaptatif comprenant à la fois un dispositif de communication en champ proche et une interface filaire destinée à le relier à la carte d'identité d'abonné, on est en mesure d'adapter n'importe quel téléphone mobile à des applications de type NFC.

Toutefois, il peut s'avérer difficile d'intégrer cet ensemble adaptatif dans un téléphone mobile quelconque.

Grâce aux caractéristiques d'un mode de réalisation de la présente invention, il est avantageusement aisé d'intégrer un tel ensemble adaptatif à n'importe quel téléphone mobile. En effet, il est ici prévu une coque adaptée pour recevoir et guider l'ensemble adaptatif et pour être fixé contre la face arrière du téléphone mobile de manière amovible. On peut ainsi aisément permettre à tout type de téléphone mobile d'offrir des fonctionnalités de type NFC.

On entend par les termes 'recevoir de manière amovible le téléphone mobile' le fait que la coque est adaptée pour accueillir le téléphone mobile considéré. A cet effet, on peut prévoir que la coque présente une surface interne d'une taille similaire à celle de la face arrière du téléphone mobile et des bords remontant le long des côtés latéraux du téléphone mobile.

Ainsi, cette coque présente un logement pour recevoir le téléphone mobile en ce sens qu'elle a une forme adaptée pour épouser les formes extérieures du téléphone mobile au niveau de la face arrière et d'aux moins certains des bords extérieurs latéraux du téléphone.

On entend par les termes 'de telle sorte que la face arrière du téléphone mobile soit maintenue le long de la surface interne de la coque' le fait que le téléphone peut être fixé de manière temporaire dans la coque. Aucune limitation n'est attachée à cet aspect au regard de la présente invention. On peut notamment prévoir que des accroches mécaniques permettent d'ancrer de manière amovible le téléphone dans le logement formé par la coque qui comprend donc une face plane épousant la forme de la face arrière du téléphone mobile et des bords remontant le long de certains côtés latéraux du téléphone.

Avantageusement la coque est non seulement adaptée pour recevoir le téléphone mobile, mais en outre elle maintient en son sein à la fois le dispositif NFC et l'interface filaire qui le relie à la carte d'identité d'abonné.

Plus précisément, la surface interne de la coque comprend un premier moyen adapté pour maintenir le dispositif NFC et son antenne. Elle comprend également un second moyen adapté pour guider au moins une portion de l'interface filaire.

Ainsi, lorsque le téléphone est logé dans la coque selon un mode de réalisation de la présente invention non seulement la face arrière du téléphone est protégée par la coque, mais en outre le dispositif NFC, son antenne et l'interface filaire, qui sont maintenus et guidés respectivement dans la face interne de la coque, sont également protégés d'éventuelles agressions extérieures comme un choc par exemple. Ainsi, on peut adapter un téléphone mobile à la mise en oeuvre d'applications NFC, tout en le protégeant et en assurant la protection de l'ensemble adaptatif.

En effet, il suffit que l'interface filaire puisse être acheminée depuis la carte d'identité d'abonné du téléphone jusqu'au dispositif NCF situé à l'extérieur au téléphone. Dans ce cas, il suffit ensuite de faire remonter l'interface filaire sur un rebord latéral du téléphone jusqu'à l'emplacement au niveau duquel l'interface filaire entre dans le téléphone mobile pour relier le dispositif NFC maintenu au niveau de la surface interne de la coque.

Dans certains modèles de téléphone mobile, la carte SIM peut être accessible de manière relativement facile à une distance à peu prés médiane entre la face arrière et la face avant du téléphone sur un côté latéral. On peut prévoir que la coque présente un côté latéral destiné à recouvrir le côté latéral du téléphone mobile au niveau duquel la carte SIM est accessible.

Dans ces conditions, tout l'ensemble adaptatif NFC, c'est-à-dire le dispositif NFC et son antenne et l'interface filaire, est protégé par la coque. De plus, l'ensemble adaptatif NFC n'est pas visible par un utilisateur du téléphone. Il est ainsi possible de transformer un téléphone mobile en équipement de type NFC sans toutefois que cette transformation ne soit réellement visible de l'extérieur.

Aucune limitation n'est attachée à la manière utilisée pour maintenir le dispositif de communication en champ proche au niveau de la surface interne de la coque ni même à l'endroit où décider de localiser le dispositif de communication en champ proche. En effet, cette localisation du dispositif NFC sur la surface peut être déduite d'une longueur de l'interface filaire qui est optimale pour le dispositif utilisé et son antenne, et des formes du téléphone mobile, ainsi que de la localisation du passage de l'interface filaire de l'extérieur vers l'intérieur du téléphone mobile, par exemple.

On peut prévoir que le premier moyen de maintien du dispositif NFC et de son antenne, et le second moyen de guidage de l'interface filaire correspondent à des quelconques moyens mécaniques adaptés pour leur rôle. Ces premier et second moyens peuvent être associés au fait qu'un faible écart soit prévu entre la face arrière du terminal et la surface interne de la coque lorsque le téléphone est logé dans la coque selon un mode de réalisation de la présente invention. Ainsi, le dispositif, son antenne et l'interface filaire peuvent être maintenus en place en outre par pression entre la face arrière du téléphone et la face interne de la coque.

Dans un mode de réalisation de la présente invention, le dispositif de communication en champ proche et l'antenne sont conçus sur un substrat ; et
le premier moyen correspond à un renfoncement dans l'épaisseur de la coque sur la surface interne, ledit renfoncement présentant une taille adaptée pour recevoir le substrat et pour le maintenir par encastrement.

Ici, le substrat recevant le dispositif NFC et son antenne est maintenu dans une position fixe au niveau de la surface interne de la coque qui est préalablement prévue dans l'épaisseur de la surface interne de la coque. Le substrat peut alors être reçu dans le renfoncement de la coque prévu à cet effet. En procédant ainsi, on peut avantageusement avoir une maîtrise parfaite au préalable de la position du dispositif NFC et de son antenne. Certaines performances liées à la longueur de l'interface filaire peuvent alors être optimisées préalablement.

On peut prévoir que ce renfoncement présente une épaisseur telle que, lorsque le substrat est positionné dans le renfoncement, la surface du substrat recevant le dispositif de communication en champ proche est au même niveau que la surface interne de la coque.

En procédant ainsi, le premier moyen adapté pour maintenir le dispositif et son antenne est à la fois efficace et aisé à mettre en place. Une fois encastré, le substrat ne peut avantageusement plus se déplacer même en cas de mobilité brusque du terminal. Il permet en outre avantageusement le fait que le substrat soit aisément amovible.

Aucune limitation n'est attachée au second moyen compris dans la surface interne de la coque.

Il peut aussi être prévu que le premier moyen de la coque selon un mode de réalisation maintient le dispositif de communication en champ proche et l'antenne qui lui est associée à l'aide de résine. Ainsi, on peut prévoir de couler la carte dans une résine faisant partie in fine de la coque.

De telles caractéristiques permettent avantageusement non seulement de maintenir le dispositif NFC et son antenne au sein de la coque mais en outre de protéger ce dispositif NFC.

Dans un mode de réalisation de la présente invention, l'interface filaire correspond à une nappe filaire plastique maintenant une pluralité de fils en son sein et présentant une largeur et une longueur de nappe ; et le second moyen correspond à un renfoncement dans l'épaisseur de la coque sur la surface interne, ledit renforcement présentant une taille adaptée pour recevoir la nappe filaire dans sa largeur et au moins une portion de la nappe filaire dans sa longueur.

Ainsi, l'interface filaire est sous la forme d'une nappe filaire et, de ce fait, présente l'avantage d'avoir une épaisseur relativement faible. Il est donc plus facile de prévoir d'y loger l'interface filaire dans ces conditions.

Puis, dans ce mode de réalisation, la surface interne de la coque comprend, en tant que second moyen, un renfoncement adapté pour recevoir la nappe filaire dans sa largeur et partiellement dans sa longueur.

Avantageusement, ainsi, la nappe filaire peut être aisément maintenue dans une position déterminée préalablement et qui peut permettre d'optimiser certaines performances qui reposent sur les échanges entre carte d'identité d'abonné et dispositif NFC. De plus, un tel renfoncement pour guider une portion de la nappe filaire permet d'éviter que la nappe soit déplacée en cours d'utilisation du téléphone mobile, tout déplacement pouvant éventuellement provoquer des perturbations non souhaitables. Ce renfoncement est d'une largeur adaptée pour recevoir la nappe filaire dans sa largeur de manière à la maintenir fixe. La longueur de ce renfoncement peut être adaptée pour recevoir une partie de la nappe filaire de sorte que l'autre partie remonte le long d'un bord du téléphone mobile pour y pénétrer et relier la carte d'identité d'abonné.

Ce renfoncement pour la nappe filaire présente une épaisseur telle que, lorsque la nappe filaire est positionnée dans le renfoncement, la nappe filaire est à fleur de la surface interne de la coque.

En procédant ainsi, la surface supérieure de la nappe filaire, c'est-à-dire la surface opposée à la surface de la nappe qui est positionnée contre la surface interne de la coque, est sensiblement au même niveau que la surface interne de la coque à l'extérieur du renfoncement considéré.

Cette caractéristique permet un maintien garanti de la nappe filaire.

Dans un mode de réalisation de la présente invention, la forme de la coque présente un bord incurvé au niveau où il est prévu de faire pénétrer l'interface filaire dans le téléphone mobile.

Une telle caractéristique permet avantageusement de protéger l'interface filaire au niveau où elle pénètre dans le téléphone mobile pour être reliée à la carte SIM.

Un deuxième aspect de la présente invention propose un terminal mobile comprenant, d'une part, un téléphone mobile ayant une carte d'identité d'abonné et, d'autre part, une coque, ledit téléphone mobile ayant, d'une part, une face avant présentant un interface utilisateur et, d'autre part, une face arrière ; et la coque ayant une surface interne et une surface externe ;
ladite coque ayant une forme adaptée pour recevoir de manière amovible le téléphone mobile de telle sorte que la face arrière du téléphone mobile soit maintenue le long de la surface interne de la coque ;
la surface interne comprenant:
- un premier moyen adapté pour maintenir un dispositif de communication en champ proche et une antenne qui lui est associée ; et
- un second moyen adapté pour guider au moins une portion d'une interface filaire destinée à relier le dispositif de communication en champ proche à la carte d'identité d'abonné.

Un tel terminal permet d'utiliser à la fois des fonctionnalités de téléphonie mobile et des fonctionnalités de type NFC, à partir d'un téléphone mobile permettant une sortie d'une interface filaire depuis la carte d'identité d'abonné vers l'extérieur du téléphone mobile. Il suffit en effet de lui adjoindre une coque adaptée pour fournir le dispositif NFC et son antenne ainsi que l'interface filaire correspondante.

Un tel terminal est avantageusement protégé contre d'éventuels chocs grâce à cette coque et en outre il dispose de fonctionnalités NFC qui sont également protégées même si le téléphone mobile n'est pas conçu à l'origine pour les accueillir.

Le terminal peut comprendre une coque quelconque selon le premier aspect de la présente invention.

Un troisième aspect de la présente invention propose un système de communication mobile comprenant une pluralité de terminaux mobiles selon le deuxième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre une coque pour téléphone mobile selon un mode de réalisation de la présente invention;
- la figure 2 illustre une coque selon un mode de réalisation de la présente invention dans laquelle est positionné un ensemble adaptatif NFC selon un mode de réalisation de la présente invention;
- la figure 3 illustre à la fois une coque et un ensemble adaptatif NFC selon un mode de réalisation de la présente invention ainsi qu'un téléphone mobile pour lequel cette coque est adaptée selon un mode de réalisation de la présente invention ;
- la figure 4 illustre une étape intermédiaire d'association du téléphone mobile et d'une coque selon un mode de réalisation de la présente invention ;
- la figure 5 illustre un système de téléphonie mobile selon un mode de réalisation de la présente invention ; et
- la figure 6 illustre un système de téléphonie mobile selon un mode de réalisation de la présente invention.

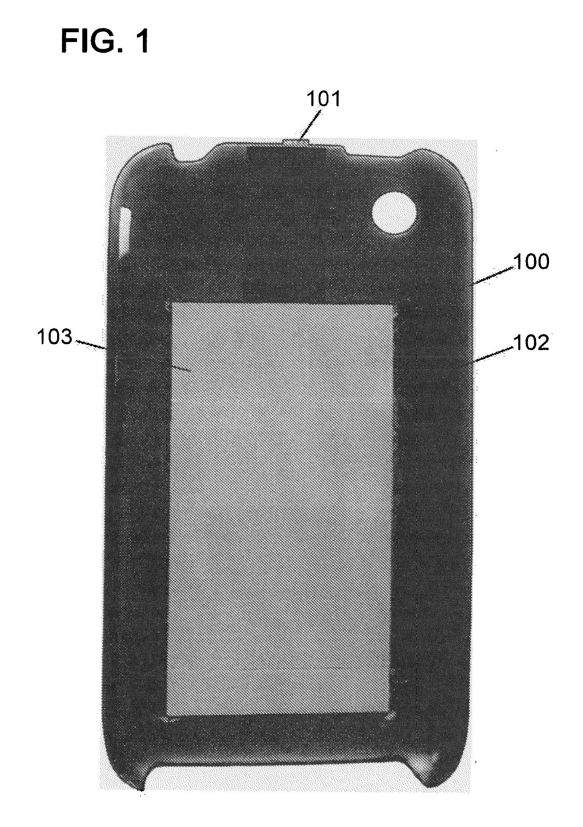

La figure 1 illustre une coque pour téléphone mobile selon un mode de réalisation de la présente invention.

Une coque 100 selon la présente invention est adaptée pour un téléphone mobile qui est apte à comprendre une carte d'identité d'abonné, ou carte « SIM » (pour « Subscriber Identity Module »). La coque 100 a une surface interne 102 qui est celle illustrée sur la figure 1 et une surface externe qui est la surface opposée et donc non illustrée. Cette surface externe de la coque peut être de forme quelconque. Dans un mode de réalisation de la présente invention, elle présente une surface lisse et plate pour la superficie destinée à recouvrir la face arrière du terminal mobile considéré, et une surface partiellement courbée sur les bords afin d'épouser les côtés latéraux du terminal mobile.

Ici, sont également illustrés un premier moyen 103 adapté pour maintenir un dispositif NFC et une antenne qui lui est associée, ainsi qu'un second moyen 101 adapté pour guider une portion d'une interface filaire destinée à relier le dispositif NFC à la carte SIM du téléphone mobile.

Le premier moyen 103 ici illustré correspond à un renfoncement dans l'épaisseur de la coque 100 adapté pour y loger au moins partiellement à la fois le dispositif NFC et son antenne associée. On peut également prévoir tout autre moyen de maintien du dispositif NFC et de son antenne, comme par exemple une colle, ou encore une attache mécanique, etc...

Dans un mode de réalisation, le dispositif NFC et son antenne sont conçus sur un substrat et le premier moyen 103 est adapté à la taille du substrat.

Le second moyen 101 ici illustré correspond à un renfoncement dans l'épaisseur de la surface interne de la coque 100 qui permet de loger l'interface filaire. Toutefois, aucune limitation n'est attachée à ce second moyen. On peut notamment par exemple prévoir que l'interface filaire soit guidée le long de la surface interne par des attaches mécaniques quelconques.

Cette coque a une forme adaptée pour recevoir de manière amovible le téléphone mobile de telle sorte que la face arrière du téléphone mobile soit maintenue le long de la surface interne de la coque.

Il est donc ici prévu d'adapter un téléphone mobile à des applications NFC en reliant la carte d'identité d'abonné à un dispositif de communication en champ proche par une interface filaire. En procédant ainsi, grâce à un ensemble adaptatif comprenant à la fois un dispositif de communication en champ proche et une interface filaire destinée à le relier à la carte d'identité d'abonné, on est en mesure d'adapter n'importe quel téléphone mobile à des applications de type NFC.

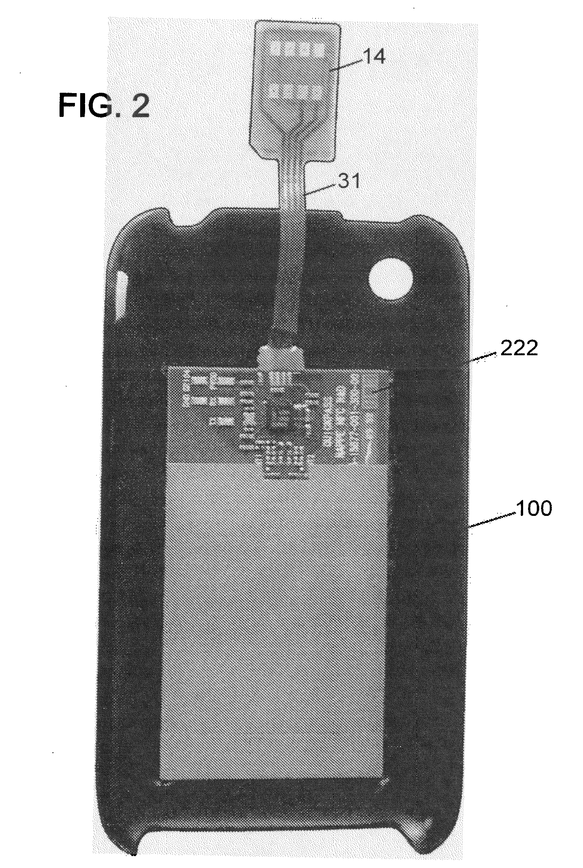

La figure 2 illustre une coque selon un mode de réalisation de la présente invention dans laquelle est positionné un ensemble adaptatif NFC selon un mode de réalisation de la présente invention.

Cette coque 100 est ici représentée avec un ensemble adaptatif NFC localisé en son sein selon un mode de réalisation de la présente invention.

L'ensemble adaptatif est constitué d'une interface filaire 31 adaptée pour être reliée à une carte SIM 14. Cette interface filaire correspond à titre illustratif à une nappe filaire 31 qui est guidée par le second moyen 101 de la coque 100, c'est-à-dire ici à titre d'exemple par un renfoncement dans l'épaisseur de la coque. En outre, l'ensemble adaptatif NFC comprend un dispositif NFC et son antenne qui sont ici à titre illustratif conçus sur un substrat 222. Ce substrat est maintenu par le premier moyen 103. Ce dernier correspond ici à un renforcement dans l'épaisseur de la coque destiné à accueillir le substrat.

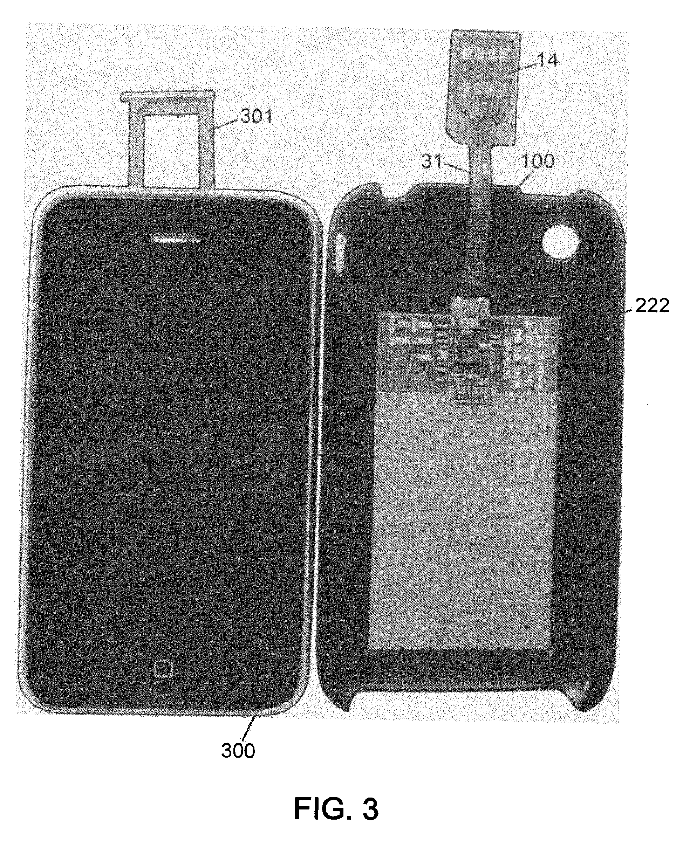

La figure 3 illustre à la fois une coque et un ensemble adaptatif NFC selon un mode de réalisation de la présente invention ainsi qu'un téléphone mobile pour lequel cette coque est adaptée selon un mode de réalisation de la présente invention.

La coque 100 est adaptée pour recevoir dans son logement un téléphone mobile 300. Ce téléphone mobile 300 a une sorte de tiroir 301 adapté pour recevoir la carte SIM 14 avant d'être poussé à l'intérieur du téléphone lui-même.

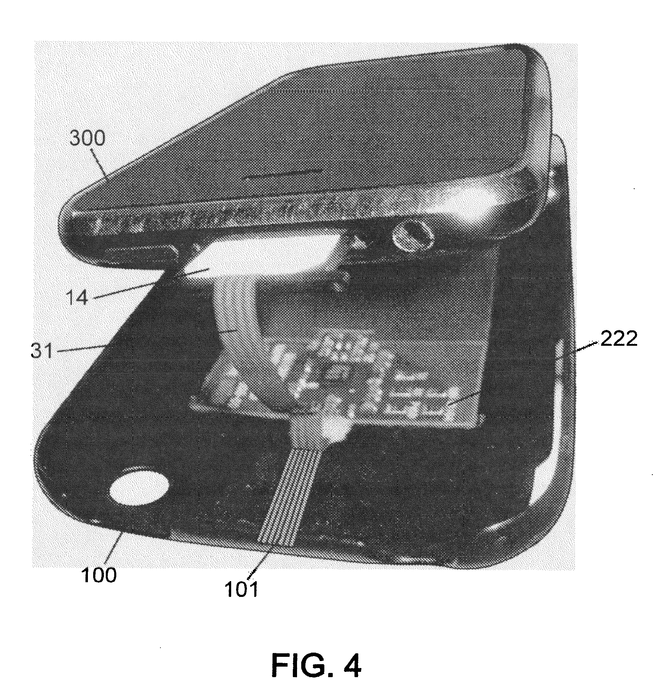

La figure 4 illustre une étape intermédiaire d'association du téléphone mobile et d'une coque selon un mode de réalisation de la présente invention.

On entend ici par le terme 'association', le fait que le téléphone soit logé dans la coque 100 selon un mode de réalisation. La figure 4 représente le téléphone 300 pour lequel cette coque 100 est adaptée. Le dispositif NFC et son antenne sont maintenus au niveau de la face interne de la coque grâce au premier moyen 103 (non représenté sur la figure 4). L'interface filaire 31 est reliée d'un côté au dispositif NFC ainsi qu'à la carte SIM 14 à son autre extrémité. La carte SIM 14 est logée dans le tiroir 301 du téléphone mobile 300 comme illustré en figure 3. Le tiroir dans lequel est logée la carte SIM 14 peut être poussé à l'intérieur du téléphone mobile. Dans cette position, il y a un espace suffisant entre le tiroir et le téléphone mobile 300 à travers lequel l'interface filaire peut passer depuis l'intérieur du téléphone mobile vers l'extérieur du téléphone mobile. En effet, une extrémité de l'interface filaire est à l'intérieur du téléphone (reliée à la carte SIM) et l'autre extrémité est à l'extérieur du téléphone reliée au dispositif NFC.

Cette figure 4 illustre une étape intermédiaire de positionnement du téléphone mobile 300 dans la coque 100. En effet, par la suite, il convient de positionner l'interface filaire 31 dans le second moyen de maintien 101 et de maintenir le téléphone mobile 300 par clipsage par exemple dans la coque, sa face arrière contre la surface interne de la coque 100.

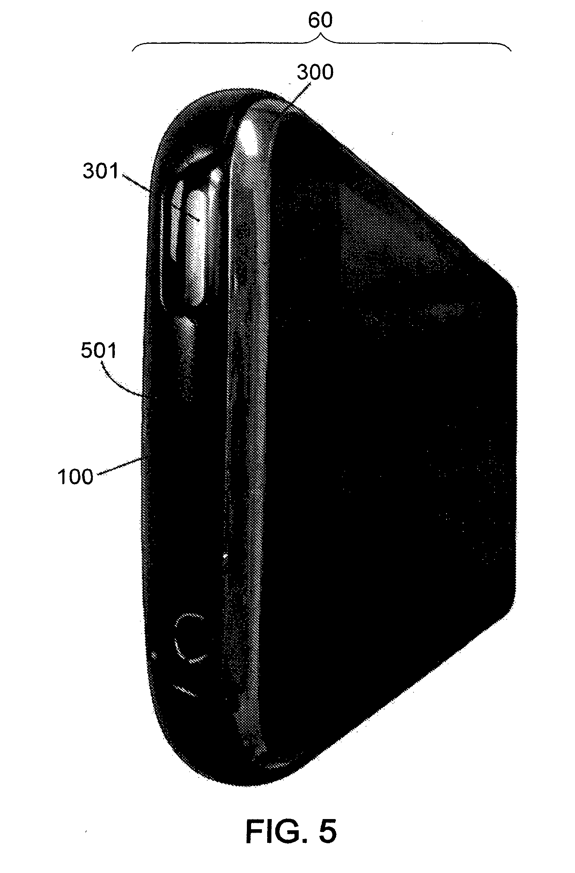

La figure 5 illustre un terminal selon un mode de réalisation de la présente invention.

Le terminal 60 comprend un téléphone mobile 300 et une coque 100. Au sein de la coque est positionné selon un mode de réalisation de la présente invention un ensemble adaptatif NFC comme décrit ci-dessus. On peut noter qu'avantageusement dans ce mode de réalisation il est prévu de pourvoir la coque d'un rebord incurvé 501 destiné à recouvrir le téléphone mobile au niveau du passage de l'interface filaire entre l'intérieur du téléphone et l'extérieur du téléphone.

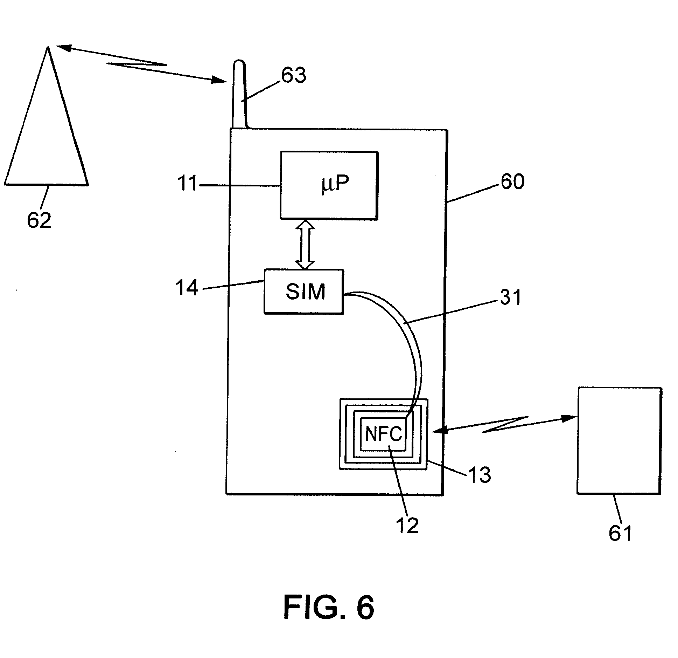

La figure 6 illustre un système de téléphonie mobile selon un mode de réalisation de la présente invention.

Un tel système comprend une pluralité de terminaux 60, chacun étant adapté, selon un mode de réalisation de la présente invention, d'une part pour gérer des communications de téléphonie mobile, et d'autre part pour gérer des communications de type NFC.

A cet effet, le système comprend des équipements de réseaux de téléphonie mobile, tels que des stations de base 62, avec lesquelles les terminaux 60 peuvent communiquer via une antenne 63 du téléphone mobile. Il comprend également un équipement NFC 61 d'applications NFC avec lequel les téléphones mobiles 60 peuvent communiquer via une antenne 13 associé au dispositif NFC. Ces deux antennes 63 et 13 sont adaptées pour la mise en oeuvre respectivement d'applications de téléphonie mobile et d'applications NFC.

## Revendications

1. Coque (100) pour un téléphone mobile (300), ledit téléphone mobile étant apte à comprendre une carte d'identité d'abonné (14) ;
ledit téléphone mobile ayant, d'une part, une face avant présentant une interface utilisateur et, d'autre part, une face arrière; et la coque ayant une surface interne (102) et une surface externe ;
ladite coque ayant une forme adaptée pour recevoir de manière amovible le téléphone mobile de telle sorte que la face arrière du téléphone mobile soit maintenue le long de la surface interne de la coque ;
**caractérisée en ce que** la surface interne comprend :
- un premier moyen (103) adapté pour maintenir un dispositif de communication en champ proche et une antenne qui lui est associée ; et
- un second moyen (101) adapté pour guider au moins une portion d'une interface filaire (31) destinée à relier le dispositif de communication en champ proche à la carte d'identité d'abonné.

2. Coque (100) pour un téléphone mobile selon la revendication 1,
dans laquelle le dispositif de communication en champ proche et l'antenne sont conçus sur un substrat (222) ; et
dans laquelle le premier moyen (103) correspond à un renfoncement dans l'épaisseur de la coque sur la surface interne, ledit renfoncement présentant une taille adaptée pour recevoir ledit substrat et pour le maintenir par encastrement.

3. Coque (100) pour téléphone mobile selon la revendication 2, dans laquelle le renfoncement présente une épaisseur telle que, lorsque le substrat est positionné dans le renfoncement, la surface du substrat recevant le dispositif de communication en champ proche est au même niveau que la surface interne de la coque.

4. Coque pour téléphone mobile selon la revendication 1, dans laquelle le premier moyen maintient le dispositif de communication en champ proche et l'antenne qui lui est associée à l'aide de résine.

5. Coque (100) pour téléphone mobile selon la revendication 1,
dans laquelle l'interface filaire (31) correspond à une nappe filaire plastique maintenant une pluralité de fils en son sein et présentant une largeur et une longueur de nappe ; et
dans laquelle le second moyen (101) correspond à un renfoncement dans l'épaisseur de la coque sur la surface interne, ledit renforcement présentant une taille adaptée pour recevoir la nappe filaire dans sa largeur et au moins une portion de la nappe filaire dans sa longueur.

6. Coque pour téléphone mobile selon la revendication 5, dans laquelle le renfoncement présente une épaisseur telle que, lorsque la nappe filaire (31) est positionnée dans le renfoncement, la nappe filaire est à fleur de la surface interne de la coque.

7. Coque pour téléphone mobile selon la revendication 1, dont la forme présente un bord incurvé au niveau où il est prévu de faire pénétrer l'interface filaire dans le téléphone mobile.

8. Terminal mobile (60) comprenant un téléphone mobile (300) ayant une carte d'identité d'abonné (14) et, d'une part, une face avant présentant une interface utilisateur et, d'autre part, une face arrière, **caractérisé en ce qu'**il comprend en outre une coque (100) selon l'une quelconque des revendications 1 à 7.

9. Terminal mobile (60) selon la revendication 8,
dans lequel le dispositif de communication en champ proche et l'antenne sont conçus sur un substrat (222) ; et
dans lequel le premier moyen (103) correspond à un renfoncement dans l'épaisseur de la coque sur la surface interne, ledit renfoncement présentant une taille adaptée pour recevoir ledit substrat et pour le maintenir par encastrement.

10. Terminal mobile (60) selon la revendication 9, dans lequel le renfoncement présente une épaisseur telle que, lorsque le substrat est positionné dans le renfoncement, la surface du substrat recevant le dispositif de communication en champ proche est au même niveau que la surface interne de la coque.

11. Terminal mobile (60) selon la revendication 8, dans lequel l'interface filaire correspond à une nappe filaire plastique (31) maintenant une pluralité de fils en son sein et présentant une largeur et une longueur de nappe ; et
dans lequel le second moyen (101) correspond à un renfoncement dans l'épaisseur de la coque sur la surface interne, ledit renforcement présentant une taille adaptée pour recevoir la nappe filaire dans sa largeur et au moins une portion de la nappe filaire dans sa longueur.

12. Terminal mobile (60) selon la revendication 11, dans lequel le renfoncement présente une épaisseur telle que, lorsque la nappe filaire (31) est positionnée dans le renfoncement, la nappe filaire est à fleur de la surface interne de la coque.

13. Système de communication mobile comprenant une pluralité de terminaux (60) mobiles selon la revendication 8.

## Patentansprüche

1. Schale (100) für ein Mobiltelephon (300), wobei das Mobiltelephon eine Teilnehmerkennungskarte (14) enthalten kann;
wobei das Mobiltelephon einerseits eine vordere Fläche, die eine Anwenderschnittstelle aufweist, und andererseits eine hintere Fläche besitzt; und die Schale eine innere Oberfläche (102) und eine äußere Oberfläche besitzt;
wobei die Schale eine Form hat, die dafür ausgelegt ist, das Mobiltelephon in der Weise entnehmbar aufzunehmen, dass die hintere Fläche des Mobiltelephons läng der inneren Oberfläche der Schale gehalten wird;
**dadurch gekennzeichnet, dass** die innere Oberfläche Folgendes umfasst:
- ein erstes Mittel (103), das dafür ausgelegt ist, eine Nahfeld-Kommunikationsvorrichtung und eine Antenne, die ihr zugeordnet ist, zu halten; und
- ein zweites Mittel (101), das dafür ausgelegt ist, wenigstens einen Abschnitt einer Drahtschnittstelle (31), die dafür vorgesehen ist, die Nahfeld-Kommunikationsvorrichtung mit der Teilnehmerkennungskarte zu verbinden, zu führen.

2. Schale (100) für ein Mobiltelephon nach Anspruch 1,
wobei die Nahfeld-Kommunikationsvorrichtung und die Antenne auf einem Substrat (222) vorgesehen sind; und
wobei das erste Mittel (103) einer Vertiefung in Dickenrichtung der Schale auf der inneren Oberfläche entspricht, wobei die Vertiefung eine Größe aufweist, die dafür ausgelegt ist, das Substrat aufzunehmen und es durch Einfügung zu halten.

3. Schale (100) für Mobiltelephon nach Anspruch 2, wobei die Vertiefung eine Dicke aufweist, derart, dass dann, wenn das Substrat in der Vertiefung positioniert ist, die Oberfläche des Substrats, die die Nahfeld-Kommunikationsvorrichtung aufnimmt, sich auf der gleichen Höhe wie die innere Oberfläche der Schale befindet.

4. Schale für Mobiltelephon nach Anspruch 1, wobei das erste Mittel die Nahfeld-Kommunikationsvorrichtung und die Antenne, die ihr zugeordnet ist, mit Hilfe von Harz hält.

5. Schale (100) für Mobiltelephon nach Anspruch 1,
wobei die Drahtschnittstelle (31) einer Kunststoffdrahtlage entspricht, die in sich mehrere Drähte hält und eine Lagenbreite und eine Lagenlänge aufweist; und
wobei das zweite Mittel (101) einer Vertiefung in Dickenrichtung der Schale auf der inneren Oberfläche entspricht, wobei die Verstärkung eine Größe aufweist, die dafür ausgelegt ist, die Drahtlage auf ihrer Breite und wenigstens einen Abschnitt der Drahtlage auf ihrer Länge aufzunehmen.

6. Schale für Mobiltelephon nach Anspruch 5, wobei die Vertiefung eine Dicke aufweist, derart, dass dann, wenn die Drahtlage (31) in der Vertiefung positioniert ist, die Drahtlage mit der inneren Oberfläche der Schale bündig ist.

7. Schale für Mobiltelephon nach Anspruch 1, deren Form auf der Höhe, auf der vorgesehen ist, dass die Drahtschnittstelle in das Mobiltelephon eindringt, einen gekrümmten Rand aufweist.

8. Mobiles Endgerät (60), das ein Mobiltelephon (300) umfasst, das eine Teilnehmerkennungskarte (14) und einerseits eine vordere Fläche, die eine Anwenderschnittstelle aufweist, und andererseits eine hintere Fläche besitzt, **dadurch gekennzeichnet, dass** es außerdem eine Schale (100) nach einem der Ansprüche 1 bis 7 umfasst.

9. Mobiles Endgerät (60) nach Anspruch 8,
wobei die Nahfeld-Kommunikationsvorrichtung und die Antenne auf einem Substrat (222) vorgesehen sind; und
wobei das erste Mittel (103) einer Vertiefung in Dickenrichtung der Schale auf der inneren Oberfläche entspricht, wobei die Vertiefung eine Größe aufweist, die dafür ausgelegt ist, das Substrat aufzunehmen und es durch Einfügung zu halten.

10. Mobiles Endgerät (60) nach Anspruch 9, wobei die Vertiefung eine Dicke aufweist, derart, dass dann, wenn das Substrat in der Vertiefung positioniert ist, die Oberfläche des Substrats, die die Nahfeld-Kommunikationsvorrichtung aufnimmt, sich auf derselben Höhe wie die innere Oberfläche der Schale befindet.

11. Mobiles Endgerät (60) nach Anspruch 8, wobei die Drahtschnittstelle einer Kunststoffdrahtlage (31) entspricht, die in sich mehrere Drähte hält und eine Lagenbreite und eine Lagenlänge aufweist; und
wobei das zweite Mittel (101) einer Vertiefung in Dickenrichtung der Schale auf der inneren Oberfläche entspricht, wobei die Verstärkung eine Größe aufweist, die dafür ausgelegt ist, die Drahtlage auf ihrer Breite und wenigstens einen Abschnitt der Drahtlage auf ihrer Länge aufzunehmen.

12. Mobiles Endgerät (60) nach Anspruch 11, wobei die Vertiefung eine Dicke aufweist, derart, dass dann, wenn die Drahtlage (31) in der Vertiefung positioniert ist, die Drahtlage mit der inneren Oberfläche der Schale bündig ist.

13. Mobilkommunikationssystem, das mehrere mobile Endgeräte (60) nach Anspruch 8 umfasst.

## Claims

1. Shell (100) for a mobile telephone (300), said mobile telephone being capable of comprising a subscriber identity card (14);
said mobile telephone having, on the one hand, a front face featuring a user interface and, on the other hand, a rear face; and the shell having an internal surface (102) and an external surface;
said shell having a form suitable for accommodating, removably, the mobile telephone in such a way that the rear face of the mobile telephone is held along the length of the internal surface of the shell;
**characterized in that** the internal surface comprises:
- a first means (103) suitable for holding a near-field communication device and an associated antenna; and
- a second means (101) suitable for guiding at least part of a wired interface (31) intended to link the near-field communication device to the subscriber identity card.

2. Shell (100) for a mobile telephone according to Claim 1, in which the near-field communication device and the antenna are formed on a substrate (222); and
in which the first means (103) corresponds to a recess in the thickness of the shell on the internal surface, said recess having a size suitable for accommodating said substrate and for holding it by recessed fitting.

3. Shell (100) for mobile telephone according to Claim 2, in which the recess has a thickness such that, when the substrate is positioned in the recess, the surface of the substrate accommodating the near-field communication device is at the same level as the internal surface of the shell.

4. Shell for mobile telephone according to Claim 1, in which the first means holds the near-field communication device and the associated antenna using resin.

5. Shell (100) for mobile telephone according to Claim 1, in which the wired interface (31) corresponds to a plastic ribbon cable holding a plurality of wires within itself and having a ribbon's breadth and length; and
in which the second means (101) corresponds to a recess in the thickness of the shell on the internal surface, said reinforcement having a size suitable for accommodating the ribbon cable in its breadth and at least part of the ribbon cable in its length.

6. Shell for mobile telephone according to Claim 5, in which the recess has a thickness such that, when the ribbon cable (31) is positioned in the recess, the ribbon cable is flush with the internal surface of the shell.

7. Shell for mobile telephone according to Claim 1, the form of which has a curved edge at the level at which it is intended for the wired interface to penetrate the mobile telephone.

8. Mobile terminal (60) comprising a mobile telephone (300) having a subscriber identity card (14) and, on the one hand, a front face featuring a user interface and, on the other hand, a rear face, **characterized in that** it additionally comprises a shell (100) according to any one of Claims 1 to 7.

9. Mobile terminal (60) according to Claim 8, in which the near-field communication device and the antenna are formed on a substrate (222); and
in which the first means (103) corresponds to a recess in the thickness of the shell on the internal surface, said recess having a size suitable for accommodating said substrate and for holding it by recessed fitting.

10. Mobile terminal (60) according to Claim 9, in which the recess has a thickness such that, when the substrate is positioned in the recess, the surface of the substrate accommodating the near-field communication device is at the same level as the internal surface of the shell.

11. Mobile terminal (60) according to Claim 8, in which the wired interface corresponds to a plastic ribbon cable (31) holding a plurality of wires within itself and having a ribbon's breadth and length; and
in which the second means (101) corresponds to a recess in the thickness of the shell on the internal surface, said reinforcement having a size suitable for accommodating the ribbon cable in its breadth and at least part of the ribbon cable in its length.

12. Mobile terminal (60) according to Claim 11, in which the recess has a thickness such that, when the ribbon cable (31) is positioned in the recess, the ribbon cable is flush with the internal surface of the shell.

13. Mobile communication system comprising a plurality of mobile terminals (60) according to Claim 8.
